# EUROPÄISCHE PATENTSCHRIFT

(11) **EP 2 695 220 B1**
(45) Veröffentlichungstag und Bekanntmachung des Hinweises auf die Patenterteilung: **11.01.2017**
(21) Anmeldenummer: 12705071.4
(22) Anmeldetag: 17.02.2012
(51) Int. Cl.: H01M 10/60

(54) **VORRICHTUNG ZUR SPANNUNGSVERSORGUNG EINES KRAFTFAHRZEUGS, INSBESONDERE SPEICHERMODUL**
APPARATUS FOR SUPPLYING VOLTAGE TO A MOTOR VEHICLE, IN PARTICULAR STORAGE MODULE
DISPOSITIF D'ALIMENTATION EN TENSION D'UN VÉHICULE AUTOMOBILE, EN PARTICULIER MODULE ACCUMULATEUR

(30) Priorität: 07.04.2011 DE 102011006912
(43) Veröffentlichungstag der Anmeldung: 12.02.2014
(73) Patentinhaber: Bayerische Motoren Werke Aktiengesellschaft, 80809 München (DE)
(72) Erfinder: GOESMANN, Hubertus, 89564 Auernheim (DE); WÖSLE, Gerd, 80469 München (DE); HÖFLER, Thomas, 82194 Groebenzell (DE); BUSCHER, Moritz, 80798 München (DE)
(86) Internationale Anmeldenummer: PCT/EP2012/000724
(87) Internationale Veröffentlichungsnummer: WO 2012/136290

(56) Entgegenhaltungen:
- WO-A1-2010/081087
- DE-A1-102009 035 461
- US-A1- 2009 263 705

## Beschreibung

Die vorliegende Erfindung betrifft eine Vorrichtung zur Spannungsversorgung eines Kraftfahrzeugs gemäß dem Oberbegriff des Patentanspruches 1.

Eine derartige Vorrichtung ist aus der DE 10 2009 045 461 A1 bekannt. Zum relevanten Stand der Technik zählen ferner die WO 2010/081087 A1 sowie die US 2009 263705 A1.

Aus der DE10 2009 035 485 A1 ist eine Vorrichtung zur Spannungsversorgung eines Kraftfahrzeugs bekannt, welche ein Zellpaket mit mehreren Speicherzellen aufweist, die jeweils in einem Speicherzellengehäuse untergebracht sind.

Das Zellpaket wird mittels eines vorderen und eines hinteren, plattenartigen Elements, die jeweils über ein linkes und ein rechtes Spannelement miteinander verbunden sind, zusammengespannt. Unterseiten der Speicherzellengehäuse sind elektrisch isolierend über eine Bodenisolierung mit einem Wärmeleitelement thermisch gekoppelt. Über die Bodenisolierung wird in den Speicherzellen entstehende Wärme an das Wärmeleitelement abgegeben.

Mehrere solcher "Speichermodule" können zu einem "Hochvoltspeicher" verschaltet und als Energiequelle für einen Elektroantrieb eines Fahrzeugs verwendet werden. Dabei sind strenge Anforderungen hinsichtlich der Isolierung des Speichermoduls zu erfüllen.

Aufgabe der Erfindung ist es, eine Vorrichtung, insbesondere ein Speichermodul, zur Spannungsversorgung eines Kraftfahrzeugs, zu schaffen, das kompakt aufgebaut ist und dessen Zellpaket möglichst gut elektrisch gegenüber das Zellpaket umgebenden Komponenten isoliert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Vorrichtung, insbesondere ein Speichermodul, zur Spannungsversorgung, insbesondere eines Kraftfahrzeugs, mit einem Zellpaket, welches aus mehreren Speicherzellen besteht. Der Begriff "Speicherzelle" ist äußerst breit zu interpretieren. Er umfasst Batterie- bzw. Akku-Zellen oder andere "Speichereinrichtungen", in denen elektrische Energie gespeichert werden kann, wie z.B. Doppelschichtkondensatoren. Jede der Speicherzellen weist jeweils ein Speicherzellengehäuse auf. Die einzelnen Speicherzellen können parallel oder seriell verschaltet sein.

Das Zellpaket wird durch ein vorderes und ein hinteres, plattenartiges Element, die jeweils über ein linkes und ein rechtes Spannelement miteinander verbunden sind, zusammengespannt. Die plattenartigen Elemente können als "Druckplatten" bezeichnet werden. Die Spannelemente können als "Spannbänder" bzw. "Zuganker" bezeichnet werden. Bei der Montage des Speichermoduls wird das Zellpaket zusammengepresst. Anschließend werden die plattenartigen Elemente mit den Spannelementen verschweißt, z.B. durch Laserschweißen, so dass das Zellpaket dauerhaft zusammengedrückt bleibt.

Wenn ein oder mehrere derartige Speichermodule in ein Speichergehäuse (Batteriegehäuse) eingesetzt werden, ist es wichtig, dass das Zellpaket - oder, genauer gesagt, die Speicherzellengehäuse des Zellpakets, gut gegenüber umgebenden Komponenten, insbesondere gegenüber den plattenartigen Elementen und den Spannelementen, elektrisch isoliert sind. In Abhängig von der Spannungslage der Speichermodule sollte eine elektrische Isolierung ggf. auch einen Berührschutz für den Menschen gewährleisten.

Ein wesentlicher Gedanke der Erfindung besteht in einer sogenannten "Außenwandisolierung", welche sich ring- oder hülsenartig entlang der Speicherzellenaußenwände um das Zellpaket herum erstreckt und die Speicherzellengehäuse bzw. das Zellpaket in Bezug auf die plattenartigen Elemente und/oder die Spannelemente elektrisch isoliert.

Wie eingangs bereits erwähnt, können während des Betriebs eines Speichermoduls in den Speicherzellen beträchtliche Wärmemengen entstehen. Um eine Überhitzung des Zellpakets zu vermeiden, muss das Zellpaket gekühlt werden. Hierzu kann ein z.B. plattenartig gestaltetes Wärmeleitelement vorgesehen sein. Das Wärmeleitelement kann über eine "Bodenisolierung" elektrisch isolierend mit Unterseiten der Speicherzellengehäuse thermisch gekoppelt sein. Die Bodenisolierung weist eine hohe elektrische Isolationswirkung und eine hohe thermische Leitfähigkeit auf. Über die Bodenisolierung kann die in den Speicherzellen entstehende Wärme gut an das Wärmeleitelement abgeführt werden, was eine kompakte Bauweise der gesamten Anordnung ermöglicht.

Bei elektrischen Spannungen von z. B. 450 Volt wird aus Sicherheitsgründen eine Mindestkriechstrecken von z. B. 7 mm gefordert (vgl. DIN EN 60664-1), was grundsätzlich zu einem relativ großen Speichermodulbauraum führen könnte. Um dies zu vermeiden, d.h. um eine kompakte Bauweise und hinreichend lange Luft- und Kriechstrecken zwischen den Speicherzellengehäusen des Zellpakets und den umgebenden Komponenten zu erreichen, kann vorgesehen sein, dass die Außenwandisolierung und die Bodenisolierung einander mindestens auf einer vorgegebenen Länge überlappen. Durch eine derartige Überlappung der beiden Isolierungen kann bei einer sehr kompakten Bauweise eine ausreichend lange Kriechstrecke zwischen den Speicherzellengehäusen des Zellpakets einerseits und den plattenartigen Elementen und den Spannelementen andererseits erreicht werden.

Je größer die Überlappung der Außenwandisolierung und der Bodenisolierung, umso länger ist die Kriechstrecke der gesamten Isolierung. Wenn sich die Außenwandisolierung und die Bodenisolierung in der oben beschriebenen Weise überlappen, erhält man - bildlich gesprochen - einen "Topf aus Isoliermaterial", in welchem das Zellpaket steht.

Vorzugsweise überlappen sich die Außenwandisolierung und die Bodenisolierung (und Isolierungen der Speicherzellengehäuse (siehe unten)) entlang des gesamten Umfangs des Zellpakets auf einer vorgegebenen Mindestlänge. Auf diese Weise kann entlang des gesamten Umfangs des Zellpakets eine hinreichend lange Kriechstrecke erreicht werden.

Sofern das Speichermodul als "Hochvoltspeicher" in einem Kraftfahrzeug eingesetzt wird und die Betriebsspannung in einem Bereich zwischen 300 und 500 Volt liegt, ist es von Vorteil, wenn sich die Außenwandisolierung und die Bodenisolierung auf einer Länge von mindestens 7 mm überlappen.

Nach einer Weiterbildung der Erfindung handelt es sich bei der Bodenisolierung um eine Folie, die sich über die gesamte Unterseite des Zellpakets erstreckt. Die Bodenisolierung kann sowohl mit der Unterseite der Speicherzellengehäuse als auch mit dem Wärmeleitelement verklebt sein. Vorzugsweise wird ein elektrisch isolierender Kleber verwendet, der eine gute Wärmeleitfähigkeit aufweist.

Nach einer Weiterbildung der Erfindung kann zusätzlich jedes der Speicherzellengehäuse des Zellpakets mit einer sich ring- oder hülsenartig um das Speicherzellengehäuse herum erstreckenden Speicherzellengehäuseisolierung versehen sein. Bei der Speicherzellengehäuseisolierung kann es sich beispielsweise um einen Schrumpfschlauch handeln, der über das Speicherzellengehäuse geschoben wird. Durch Erwärmen des Schrumpfschlauchs kann dieser eng anliegend auf das Speicherzellengehäuse aufgeschrumpft werden. Die Speicherzellengehäuseisolierung kann sich von einem der Unterseite nahen Bereich des betreffenden Speicherzellengehäuses bis zur Oberseite oder bis in einen Bereich nahe der Oberseite des Speicherzellengehäuses erstrecken.

Bei einer bevorzugten Ausführungsform der Erfindung sind die Außenwandisolierung und die Bodenisolierung labyrinthartig oder zick-zackartig verfaltet. Auf diese Weise kann sehr einfach und platzsparend eine relativ lange Überlappungsstrecke dargestellt werden, was auf engstem Bauraum die Einhaltung aus Sicherheitsgründen geforderter Mindestluft- und Mindestkriechstrecken ermöglicht.

Bei der Außenwandisolierung kann es sich um eine aus einem Kunststoffmaterial gespritzte Isolierkomponente handeln. Die Außenwandisolierung kann z.B. eine Wandstärke aufweisen, die im Bereich zwischen 0,3 und 1,5 mm liegt. Je dicker die Wandstärke der Außenwandisolierung ist, um so größer ist naturgemäß die "Durchschlagfestigkeit". Die Außenwandisolierung kann auch als Folie ausgebildet sein. Sie kann von außen her auf das Zellpaket aufgeklebt sein. Die Folie kann glatt ausgebildet oder mit einer dreidimensionalen Struktur (z.B. 3D-Prägung versehen sein), wodurch sich ihre Isolationswirkung weiter verbessert.

Die Bodenisolierung sollte möglichst dünn sein, um einen guten Wärmeübergang zwischen dem Speicherzellengehäuse und dem Wärmeleitelement zu erreichen. Die Dicke der Bodenisolierung kann beispielsweise in einem Bereich von weniger als 300 Mikrometern, insbesondere in einem Bereich von weniger als 100 Mikrometern liegen.

Nach einer Weiterbildung der Erfindung ist eine Kühleinrichtung vorgesehen, mittels der dem Wärmeleitelement Wärme entziehbar ist. Die Kühleinrichtung kann integraler Bestandteils des Wärmeleitelements sein. Alternativ dazu kann vorgesehen sein, dass das Speichermodul in ein Speichergehäuse eingesetzt ist, wobei eine Kühleinrichtung zwischen dem Gehäuseboden des Speichergehäuses und dem Wärmeleitelement angeordnet ist oder die Kühleinrichtung in den Gehäuseboden des Speichergehäuses integriert ist.

Bei der Kühleinrichtung kann es sich um eine kombinierte Heiz-/Kühleirichtung handeln, d.h. um eine Einrichtung, mit der, je nach Temperaturzustand des Zellpakets, das Zellpaket bedarfsgerecht beheizt oder gekühlt werden kann.

Die Speicherzellengehäuse können grundsätzlich beliebige Formen haben. Sie können beispielsweise quaderförmig oder kreiszylindrisch gestaltet sein. Quaderförmige Speicherzellengehäuse haben den Vorteil, dass praktisch keine Totvolumina zwischen den einzelnen Speicherzellengehäusen des Zellpakets bestehen.

Im Folgenden wird die Erfindung im Zusammenhang mit der Zeichnung näher erläutert. Es zeigen:
- Figur 1: Ein erstes Ausführungsbeispiel gemäß der Erfindung;
- Figur 2: eine zweites Ausführungsbeispiel gemäß der Erfindung.

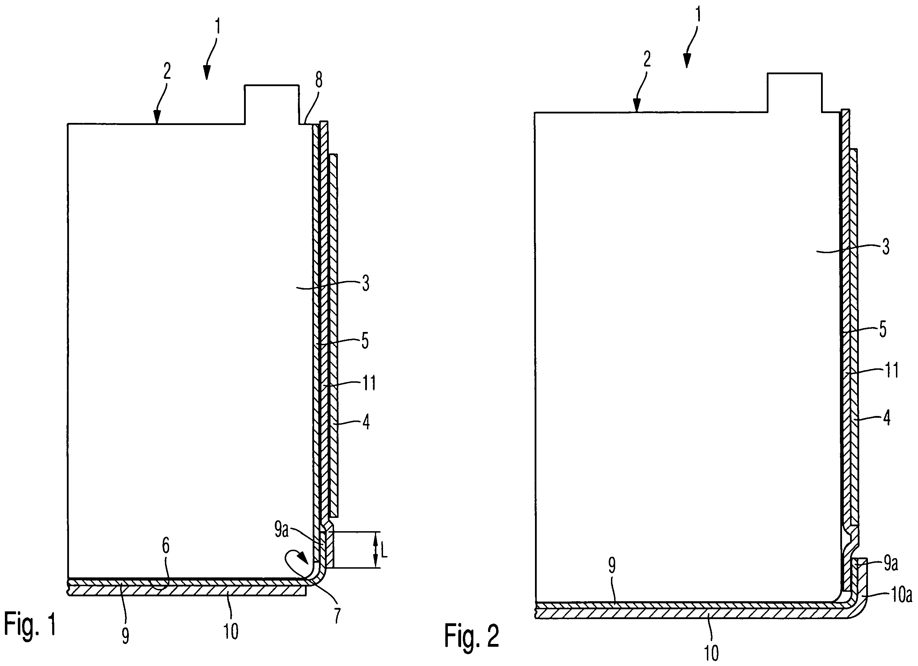

Figur 1 zeigt einen Querschnitt durch ein Zellpaket 1, das aus mehreren hintereinander angeordneten, im Wesentlichen rechteckförmigen bzw. quaderförmigen Speicherzellen 2 besteht. Jede der Speicherzellen weist ein Speicherzellengehäuse 3 auf. Die einzelnen Speicherzellen können identisch gestaltet sein und in einer Richtung senkrecht zur Zeichenebene hintereinander geschachtelt angeordnet sein.

Das Zellpaket 1 ist mittels zweier Druckplatten (nicht dargestellt), nämlich einer vorderen und einer hinteren Druckplatte, in einer Richtung senkrecht zur Zeichenebene verspannt. Die beiden Druckplatten sind über ein rechtes und ein linkes Spannelement, von denen in Figur 1 lediglich das rechte Spannelement (Zuganker) 4 zu erkennen ist, miteinander verspannt. Im Betrieb eines solchen Speichermoduls können aufgrund chemischer Vorgänge, die in den Speicherzellen ablaufen, beträchtliche Drücke in den Speicherzellen entstehen, die zu einer Verformung (Ausbeulung) der Speicherzellengehäuse 3 führen würden. Um derartige Verformungen des Zellpakets zu verhindern bzw. zu begrenzen, wird das Zellpaket über die mittels der Spannelemente miteinander verbundenen Druckplatten zusammengespannt.

Jedes der Speicherzellengehäuse ist mit einer sich ring- oder hülsenartig um das Speicherzellengehäuse 3 herum erstreckenden Speicherzellengehäuseisolierung 5 versehen, die durch einen Schrumpfschlauch gebildet sein kann. Wie aus Figur 1 ersichtlich ist, erstreckt sich der Schrumpfschlauch 5 von einem einer Unterseite 6 des Speicherzellengehäuses 3 nahen Bereich 7 bis zu einer Oberseite 8 des Speicherzellengehäuses 3. Alternativ zu einem Schrumpfschlauch kann die Speicherzellenisolierung auch vergleichbar einer "Banderole", deren Enden überlappend miteinander verklebt sind, appliziert sein.

Auf die Unterseiten 6 der Speicherzellengehäuse 3 der Zellanordnung ist eine elektrisch isolierende Schicht 9 aufgeklebt, welche eine "Bodenisolierung" des Zellpakets 1 bildet. Die Bodenisolierung 9 wiederum ist auf ein Wärmeleitblech 10 aufgeklebt. Wärme, die während des Betriebs des Speichermoduls in den Speicherzellen 2 des Zellpakets 1 entsteht, wird über die Bodenisolierung an das Wärmeleitblech abgegeben und vom Wärmeleitblech über eine hier nicht näher dargestellte Kühleinrichtung abgeführt.

Wie aus Figur 1 ersichtlich ist, ist die Bodenisolierung 9 in den unteren Seitenbereichen des Zellpakets 1 nach oben geführt. Der nach oben geführte Bereich der Bodenisolierung 9 ist durch das Bezugszeichen 9a gekennzeichnet. Allein durch das nach oben Führen der Bodenisolierung wird bereits eine Verlängerung der Kriechstrecke des Speicherzellengehäuses 3 in Bezug auf das Wärmeleitblech 10 erreicht.

Zusätzlich zu der nach oben geführten Bodenisolierung 9 ist eine Außenwandisolierung 11 vorgesehen, welche sich ring- oder hülsenartig entlang der "Außenwände des Zellpakets 1" um das gesamte Zellpaket 1 herum erstreckt. Die Außenwandisolierung kann durch ein Spritzgussteil bzw. durch eine Isolationsfolie gebildet sein. Die Dicke der Außenwandisolierung kann z.B. im Bereich zwischen 0,3 und 1,5 mm liegen.

Wie aus Figur 1 ersichtlich ist, erstreckt sich die Außenwandisolierung 11 von einem der Unterseite 6 nahen Bereich bis zur Oberseite 8. Bei dem in Figur 1 gezeigten Ausführungsbeispiel überdeckt bzw. überlappt die Außenwandisolierung 11 den nach oben gezogenen Bereich 9a der Bodenisolierung 9 auf einer Länge L. Die Länge L kann z.B. 7mm betragen. Durch die Überlappung der beiden Isolierungen 9, 11 wird eine relativ lange Kriechstrecke des Speicherzellengehäuses 3 in Bezug auf umgebende Komponenten, wie z.B. das Spannelement 4 oder die Druckplatten 8 (nicht dargestellt), erreicht.

Beim Ausführungsbeispiel der Figur 2 ist das Wärmeleitelement bzw. Wärmeleitblech 10 wannenartig ausgebildet, d.h. es ist in einem Bereich 10a nach oben geführt. Die Bodenisolierung 9 ist auf die gesamte "Oberseite" des Wärmeleitelements 10 und somit auch auf den nach oben geführten Abschnitt 10a aufgeklebt. Im Unterschied zum Ausführungsbeispiel der Figur 1 überlappt beim Ausführungsbeispiel der Figur 2 der nach oben geführte Abschnitt 9a der Bodenisolierung die Außenwandisolierung 11 des Zellpakets 1 von außen her.

## Patentansprüche

1. Vorrichtung, insbesondere Speichermodul, zur Spannungsversorgung, insbesondere zur Spannungsversorgung eines Kraftfahrzeugs, mit
• einem Zellpaket (1) mit mehreren Speicherzellen (2), die jeweils ein Speicherzellengehäuse (3) aufweisen,
• einem vorderen und einem hinteren plattenartigen Element, die jeweils über ein linkes und ein rechtes Spannelement (4) miteinander verbunden sind, wobei das Zellpaket (1) mittels der Spannelemente (4) zwischen den plattenartigen Elementen eingespannt ist,
• einer Außenwandisolierung (11) vorgesehen ist, die das Zellpaket (1) in Bezug auf die plattenartigen Elemente und/oder die Spannelemente (4) elektrisch isoliert, und
• einem Wärmeleitelement (10), das über eine Bodenisolierung (9) elektrisch isolierend mit Unterseiten (6) der Speicherzellengehäuse (3) thermisch gekoppelt ist, wobei über die Bodenisolierung (9) in den Speicherzellen (2) entstehende Wärme an das Wärmeleitelement (10) abgegeben wird,
**dadurch gekennzeichnet, dass**
• sich die Außenwandisolierung (11) ring- oder hülsenartig entlang von Speicherzellenaußenwänden um das Zellpaket (1) herum und von einem den Unterseiten (6) nahen Bereich der Speicherzellengehäuse (3) bis zu Oberseiten (8) der Speicherzellengehäuse (3) erstreckt und
• die Außenwandisolierung (11) und die Bodenisolierung (9) einander überlappen, um zwischen den Speicherzellengehäusen (3) einerseits und den plattenartigen Elementen und den Spannelementen (4) andererseits eine Mindestkriechstrecke zu erreichen.

2. Vorrichtung nach Anspruch 1,
**dadurch gekennzeichnet, dass** sich die Bodenisolierung (9) und die Außenwandisolierung (11) entlang des gesamten Umfangs des Zellpakets (1) auf einer vorgegebenen Länge (L) überlappen.

3. Vorrichtung nach Anspruch 2,
**dadurch gekennzeichnet, dass** die vorgegebene Länge (L) mindestens 7 mm beträgt.

4. Vorrichtung nach einem der Ansprüche 1 bis 3,
**dadurch gekennzeichnet, dass** sich die Bodenisolierung (9) über die gesamte Unterseite des Zellpakets (1) erstreckt.

5. Vorrichtung nach einem der Ansprüche 1 bis 4,
**dadurch gekennzeichnet, dass** jedes Speicherzellengehäuse (3) eine sich ring- oder hülsenartig um das Speicherzellengehäuse (3) herum erstreckende Speicherzellengehäuseisolierung (5) aufweist, die sich jeweils von einem der Unterseite (6) nahen Bereich des Speicherzellengehäuses bis in einen der Oberseite (8) nahen Bereich des Speicherzellengehäuses (3) erstreckt.

6. Vorrichtung nach einem der Ansprüche 2 bis 5,
**dadurch gekennzeichnet, dass** die Bodenisolierung (9) mit der Außenwandisolierung (11) labyrinthartig verfaltet ist.

7. Vorrichtung nach einem der Ansprüche 1 bis 6,
**dadurch gekennzeichnet, dass** die Außenwandisolierung eine aus einem Kunststoffmaterial gespritzte Isolierkomponente ist.

8. Vorrichtung nach einem der Ansprüche 1 bis 7,
**dadurch gekennzeichnet, dass** die Außenwandisolierung eine Wandstärke im Bereich zwischen 0,3 mm und 1,5 mm aufweist.

9. Vorrichtung nach einem der Ansprüche 1 bis 8,
**dadurch gekennzeichnet, dass** die Bodenisolierung (9) eine Dicke von weniger als 300 Mikrometern, insbesondere von weniger als 100 Mikrometern aufweist.

10. Vorrichtung nach einem der Ansprüche 1 bis 9,
**dadurch gekennzeichnet, dass** die Bodenisolierung (9) auf das Wärmeleitelement (10) aufgeklebt ist.

11. Vorrichtung nach einem der Ansprüche 1 bis 10,
**dadurch gekennzeichnet, dass** die Unterseiten (6) der Speicherzellengehäuse (3) mit der Bodenisolierung (9) verklebt sind.

12. Vorrichtung nach einem der Ansprüche 1 bis 11,
**dadurch gekennzeichnet, dass** eine Kühleinrichtung vorgesehen ist, mittels der dem Wärmeleitelement (10) Wärme entziehbar ist.

13. Vorrichtung nach einem der Ansprüche 1 bis 12,
**dadurch gekennzeichnet, dass** die Vorrichtung in einem Speichergehäuse angeordnet ist, wobei eine Kühleinrichtung zwischen einem Gehäuseboden des Speichergehäuses und dem Wärmeleitelement (10) angeordnet ist oder in den Gehäuseboden des Speichergehäuses integriert ist.

14. Vorrichtung nach einem der Ansprüche 1 bis 13,
**dadurch gekennzeichnet, dass** die Speicherzellengehäuse (3) eine quaderförmige oder kreiszylindrische Form haben.

## Claims

1. A device, especially a storage module, for supplying power, especially for the power supply of a motor vehicle, having
• a cell stack (1) with a plurality of storage cells (2) which each have a storage cell housing (3),
• a front and a rear plate-like element which are respectively interconnected by a left and a right clamping element (4), wherein the cell stack (1) is clamped between the plate-like elements by the clamping elements (4),
• an outer wall insulation (11) is provided which electrically insulates the cell stack (1) in respect of the plate-like elements and/or the clamping elements (4), and
• a heat-conducting element (10) which is thermally coupled in an electrically insulating manner to undersides (6) of the storage cell housings (3) via a floor insulation (9), wherein heat evolving in the storage cells (2) is released to the heat-conducting element (10) via the floor insulation (9),
**characterised in that**
• the outer wall insulation (11) extends annularly or in a sleeve-like manner along outer walls of storage cells around the cell stack (1) and from a region of the storage cell housings (3) near the undersides (6) to upper sides (8) of the storage cell housings (3), and
• the outer wall insulation (11) and the floor insulation (9) overlap one another in order to achieve a minimum creep path between the storage cell housings (3) on the one hand and between the plate-like elements and the clamping elements (4) on the other hand.

2. A device according to claim 1,
**characterised in that** the floor insulation (9) and the outer wall insulation (11) overlap one another over a predetermined length (L) along the entire periphery of the cell stack (1).

3. A device according to claim 2,
**characterised in that** the predetermined length (L) is at least 7 mm.

4. A device according to any one of claims 1 to 3,
**characterised in that** the floor insulation (9) extends over the entire underside of the cell stack (1).

5. A device according to any one of claims 1 to 4,
**characterised in that** each storage cell housing (3) has a storage cell housing insulation (5) which extends annularly or in a sleeve-like manner around the storage cell housing (3) and which respectively extends from a region of the storage cell housing near the underside (6) into a region of the storage cell housing (3) near the upper side (8).

6. A device according to any one of claims 2 to 5,
**characterised in that** the floor insulation (9) is folded in a labyrinth-like manner with the outer wall insulation (11).

7. A device according to any one of claims 1 to 6,
**characterised in that** the outer wall insulation is an insulating component injected from a plastics material.

8. A device according to any one of claims 1 to 7,
**characterised in that** the outer wall insulation has a wall thickness within a range of between 0.3 mm and 1.5 mm.

9. A device according to any one of claims 1 to 8,
**characterised in that** the floor insulation (9) has a thickness of less than 300 micrometres, especially less than 100 micrometres.

10. A device according to any one of claims 1 to 9,
**characterised in that** the floor insulation (9) is affixed to the heat-conducting element (10).

11. A device according to any one of claims 1 to 10,
**characterised in that** the undersides (6) of the storage cell housings (3) are adhesively bonded with the floor insulation (9).

12. A device according to any one of claims 1 to 11,
**characterised in that** a cooling means is provided by which heat can be removed from the heat-conducting element (10).

13. A device according to any one of claims 1 to 12,
**characterised in that** the device is arranged in a storage housing, a cooling means being arranged between a housing floor of the storage housing and the heat-conducting element (10) or is integrated into the housing floor of the storage housing.

14. A device according to any one of claims 1 to 13,
**characterised in that** the storage cell housings (3) have a cuboidal or circular cylindrical shape.

## Revendications

1. Dispositif, en particulier module accumulateur pour l'alimentation en tension en particulier l'alimentation en tension d'un véhicule automobile comprenant :
- un paquet de cellules (1) comprenant plusieurs cellules d'accumulation (2) comportant chacune un boîtier de cellule d'accumulation (3),
- un élément en forme de plaque avant et un élément en forme de plaque arrière qui sont reliés par un élément de serrage gauche et d'un élément de serrage droit (4), le paquet de cellules (1) étant serré entre les éléments en forme de plaque par les éléments de serrage (4),
- il est prévu une isolation de paroi externe (11) qui isole électriquement le paquet de cellules (1) par rapport aux éléments en forme de plaque et/ou aux éléments de serrage (4),
- un élément thermiquement conducteur (10) qui est couplé thermiquement avec les faces inférieures (6) du boîtier de cellules d'accumulation (3) en étant électriquement isolé par une isolation inférieure (9), la chaleur produite dans les cellules d'accumulation (2) étant dégagée par les éléments thermiquement conducteurs (10) par l'intermédiaire de l'isolation inférieure (9),
**caractérisé en ce que**
- l'isolation de la paroi externe (11) s'étend annulairement ou en forme de manchon le long des parois externes des cellules d'accumulation, autour du paquet de cellules (1), et d'une zone du boîtier des cellules d'accumulation (3) proche des faces inférieures (6) jusqu'aux faces supérieures (8) du boîtier des cellules d'accumulation (3), et
- l'isolation la paroi externe (11) et l'isolation inférieure (9) se chevauchent pour obtenir une ligne de fuite minimum entre les boîtiers des cellules d'accumulation (3) d'une part et les éléments en forme de plaque et les éléments de serrage (4) d'autre part.

2. Dispositif conforme à la revendication 1,
**caractérisé en ce que**
l'isolation inférieure (9) et l'isolation de la paroi externe (11) se chevauchent sur une longueur (L) prédéfinie le long de la totalité de la périphérie du paquet de cellules (1).

3. Dispositif conforme à la revendication 2,
**caractérisé en ce que**
la longueur prédéfinie (L) est d'au moins 7 mm.

4. Dispositif conforme à l'une des revendications 1 à 3,
**caractérisé en ce que**
l'isolation inférieure (9) s'étend sur la totalité de la face inférieure du paquet de cellules (1).

5. Dispositif conforme à l'une des revendications 1 à 4,
**caractérisé en ce que**
chaque boîtier de cellules d'accumulation (3) comprend une isolation de boîtier de cellules d'accumulation (5) s'étendant annulairement ou en forme de manchon autour de ce boîtier de cellules d'accumulation (3), qui s'étend respectivement d'une zone du boîtier de cellules d'accumulation proche de la face inférieure (6) jusqu'à une zone du boîtier de cellules d'accumulation (3) proche de la face supérieure (8).

6. Dispositif conforme à l'une des revendications 2 à 5,
**caractérisé en ce que**
l'isolation inférieure (9) est repliée en forme de labyrinthe avec l'isolation de la paroi externe (11).

7. Dispositif conforme à l'une des revendications 1 à 6,
**caractérisé en ce que**
l'isolation de la paroi externe est un composé isolant injecté en un matériau synthétique.

8. Dispositif conforme à l'une des revendications 1 à 7,
**caractérisé en ce que**
l'isolation de la paroi externe a une épaisseur comprise dans la plage située entre 0,3 mm et 1,5 mm.

9. Dispositif conforme à l'une des revendications 1 à 8,
**caractérisé en ce que**
l'isolation inférieure (9) a une épaisseur inférieure à 300 micromètres, en particulier inférieure à 100 micromètres.

10. Dispositif conforme à l'une des revendications 1 à 9,
**caractérisé en ce que**
l'isolation inférieure (9) est collée sur l'élément thermiquement conducteur (10).

11. Dispositif conforme à l'une des revendications 1 à 10,
**caractérisé en ce que**
les faces inférieures (6) des boîtiers de cellules d'accumulation (3) sont collées avec l'isolation inférieure (9).

12. Dispositif conforme à l'une des revendications 1 à 11,
**caractérisé en ce qu'**
il est prévu un dispositif de refroidissement permettant d'extraire de la chaleur de l'élément thermiquement conducteur (10).

13. Dispositif conforme à l'une des revendications 1 à 12,
**caractérisé en ce qu'**
il est installé dans un boîtier accumulateur, un dispositif de refroidissement étant installé entre le fond du boîtier accumulateur et l'élément thermiquement conducteur ou étant intégré dans le fond du boîtier accumulateur.

14. Dispositif conforme à l'une des revendications 1 à 13,
**caractérisé en ce que**
les boîtiers des cellules d'accumulation (3) ont la forme d'un parallélépipède ou d'un cylindre circulaire.
